# EUROPÄISCHE PATENTANMELDUNG

(11) **EP 3 517 877 A1**
(43) Veröffentlichungstag der Anmeldung: **31.07.2019**
(21) Anmeldenummer: 18153425.6
(22) Anmeldetag: 25.01.2018
(51) Int. Cl.: F28F 3/00, F28D 9/00, F28D 21/00

(54) **DOSIERMODUL MIT EINER TEMPERIERBAREN DOSIEREINRICHTUNG UND VERFAHREN ZUM TEMPERIEREN EINER DOSIEREINRICHTUNG**

(71) Anmelder: Bayer AG, 51373 Leverkusen (DE)
(72) Erfinder: Die Erfindernennung liegt noch nicht vor
(74) Vertreter: BIP Patents

(57) **Zusammenfassung**

Die Erfindung betrifft ein Dosiermodul (10), insbesondere für eine modular aufgebaute Prozessanlage, mit einem Dosiersystem (24) zum Dosieren eines Fluides, einem das Dosiersystem (24) zumindest teilweise einhausenden Gehäuse (32) sowie einer Temperiereinrichtung zum Temperieren des Inneren des Gehäuses (32), wobei die Temperiereinrichtung einen Plattenwärmetauscher (34) aufweist und zumindest ein Teil des Gehäuses (32) von zumindest einer Plattenstruktur (36) dieses Plattenwärmetauschers (34), insbesondere von zumindest einer sogenannten Wärmetauscherplatte, gebildet wird.

Die Erfindung betrifft weiterhin eine modular aufgebaute Prozessanlage für die Produktion eines chemischen und/oder pharmazeutischen Produktes mit einem derartigen Dosiermodul (10) und ein Verfahren zum Temperieren einer Dosiereinrichtung (24) zum Dosieren von Flüssigkeiten.

## Beschreibung

Die Erfindung betrifft ein Dosiermodul, insbesondere für eine modular aufgebaute Prozessanlage, mit einem Dosiersystem zum Dosieren eines Fluides, einem das Dosiersystem zumindest teilweise einhausenden Gehäuse sowie einer Temperiereinrichtung zum Temperieren des Inneren des Gehäuses.

Des Weiteren betrifft die Erfindung eine modular aufgebaute Prozessanlage für die Produktion eines chemischen und/oder pharmazeutischen Produktes, mit einem oder mehreren derartigen Dosiermodulen sowie ein Verfahren zum Temperieren einer Dosiereinrichtung zum Dosieren von Flüssigkeiten.

Die Druckschrift WO 2007/057432 A1 zeigt einen Probennehmer zur automatischen Entnahme von Flüssigkeitsproben aus einer Probenentnahmestelle. Dieser Probennehmer umfasst (i) eine Probenentnahmeeinheit mit einer Dosiereinrichtung, (ii) eine Probensammeleinheit zur Lagerung entnommener Proben, (iii) ein Gehäuse, welches die Probenentnahmeeinheit sowie die Probensammeleinheit einhaust, sowie (iv) eine Temperiereinheit zum Temperieren von Komponenten des Probennehmers im Inneren des Gehäuses.

Unter dem Begriff "Temperieren" ist im Zusammenhang mit der vorliegenden Erfindung "etwas auf eine bestimmte Temperatur zu bringen" zu verstehen. Dies kann je nach Soll- und Ist-Wert der Temperatur durch Heizen bzw. Kühlen geschehen.

Aufgabe der Erfindung ist es, Maßnahmen anzugeben, die ein Dosieren von Fluiden mit gegenüber der Umgebungstemperatur abweichenden Temperaturen möglichst effektiv ermöglichen.

Die Lösung der Aufgabe erfolgt erfindungsgemäß durch die Merkmale der unabhängigen Ansprüche. Bevorzugte Ausgestaltungen der Erfindung sind in den Unteransprüchen angegeben, die jeweils für sich genommen oder in beliebiger Kombination miteinander einen Aspekt der Erfindung darstellen können.

Bei dem erfindungsgemäßen Dosiermodul zum Dosieren eines Fluides, mit einem Dosiersystem, einem das Dosiersystem zumindest teilweise einhausenden Gehäuse sowie einer Temperiereinrichtung zum Temperieren des Inneren des Gehäuses, ist vorgesehen, dass die Temperiereinrichtung einen Plattenwärmetauscher aufweist und zumindest ein Teil des Gehäuses von zumindest einer Plattenstruktur dieses Plattenwärmetauschers gebildet wird. Dieses vorgeschlagene temperierte Dosiersystem mit Einhausung folgt der Überlegung, die zu temperierenden Systemkomponenten so weit als möglich im eingehausten Bereich temperiert zu halten und auf eine Temperierung der Einzelkomponenten - wo es geht - zu verzichten.

Ein Plattenwärmetauscher (PWT)- oft auch als Plattenwärmeübertrager (PWÜ) oder Plattenkühler (PK) bezeichnet - ist eine spezielle Bauform eines Wärmeübertragers mit einer Plattenstruktur, beispielsweise einem Plattenstapel aus profilierten Platten, die so zusammengesetzt sind, dass jeweils in den aufeinanderfolgenden Zwischenräumen einmal das aufzuwärmende und danach das wärmeabgebende Medium fließt.

Als Plattenwärmetauscher wird zur Realisierung der Erfindung vorteilhaft das WTP-System (Wärmeaustauschplatten-System), beispielsweise der LOB GmbH, eingesetzt. Die Plattenstruktur dieses WTP-Systems wird auch als Wärmetauscherplatte bezeichnet. Das Prinzip des WTP-Systems beruht darauf, dass auf ein Trägerblech / eine Trägerplatte ein bis zu 2 mm dickes Blech aufgebracht und mittels Laserschweißung verbunden wird. Die Laserschweißung bildet Strömungskanäle für das Temperiermedium. Nach der Schweißung werden diese Kanäle durch Innendruck aufgeweitet, wodurch gleichmäßige Hohlräume entstehen. Durch diese Hohlräume kann dann das Wärmeträgermedium geleitet werden. Durch das Prinzip lassen sich sowohl Bohrungen und andere Aussparungen als auch nahezu beliebige Außenkonturen des WTP-Systems realisieren (siehe auch http://www.lob-gmbh.de/de/wtp-system/index.html#). Das WTP-System ist auch unter den Bezeichnungen "Pillow Plate" und "Thermoblech" bekannt. Der prinzipielle Aufbau des WTP-Systems der LOB GmbH wird u.A. in der Patentschrift DE 10 2006 029 821 B3 beschrieben.

Das zu dosierende Fluid ist in der Regel eine Flüssigkeit, kann aber auch ein Flüssigkeits-Gas-Gemisch oder gasförmig sein. Die durch das Temperieren zu erreichende Temperatur wird in der Regel durch das zu dosierende Fluid bestimmt. Das Fluid kann beispielsweise eine Flüssigkeit sein, deren Erstarrungspunkt oberhalb der Raumtemperatur liegt. In diesem Fall muss zum Temperieren geheizt werden.

In einigen Fällen ist es ungünstig das gesamte Dosiersystem zu temperieren, da die vom zu dosierenden Fluid vorgegebene Temperatur für Teile des Dosiersystems ungeeignet ist. In diesem Fall wir das Dosiersystem nur teilweise eingehaust, sodass diese Teile des Dosiersystems außerhalb des temperierten Gehäuses liegen.

Gemäß einer bevorzugten Ausführungsform der Erfindung ist vorgesehen, dass das Dosiersystem mehrere über ein Rohrleitungssystem miteinander strömungstechnisch verschaltete Systemkomponenten aufweist. Eine typische Systemkomponente des Dosiersystems ist beispielsweise eine (Dosier-)Pumpe. Diese ist über Rohrleitungen des Rohrleitungssystems innerhalb des Moduls strömungstechnisch verschaltet.

Dabei ist insbesondere vorgesehen, dass zumindest eine Systemkomponente des Dosiersystems an der oder zumindest einer der den Teil des Gehäuses bildenden Plattenstrukturen des Plattenwärmetauschers unmittelbar befestigt ist.

Da die Antriebsmotoren üblicher Pumpen in der Regel nicht für den Einsatz bei hohen Temperaturen ausgelegt sind, wird eine Anordnung der Pumpe so vorgeschlagen, dass sich der Pumpenkopf im temperierten Gehäuse befindet und der Motor außerhalb. Um die Wärmeleitung aus der Wärmetauscherplatte in den Pumpenkopf zu unterstützen ist eine besonders vorteilhafte Anordnung die Anbringung der Pumpe über den Flansch des Pumpenkopfs direkt an der Wärmetauscherplatte.

Wenn möglich sollte ein Temperieren des Dosiersystems ausschließlich über das temperierte Gehäuse erfolgen. Lediglich zur Ergänzung -zum Beispiel nach einem Umbau des Moduls- sind weitere Temperiermaßnahmen erforderlich. Zu diesem Zweck ist dann mit Vorteil vorgesehen, dass zumindest ein Teil der Rohrleitungen des Rohrleitungssystems als medientemperierbare (medienbeheizbare) Rohrleitungen ausgebildet ist und/oder zumindest eine der Systemkomponenten medientemperierbar (medienheizbar) ist. Entsprechende medienbeheizte Rohrleitungen sind bekannt und werden unter anderem von dem Anbieter Swagelok als Bündelrohre mit Dampfbegleitheizung angeboten. Medienbeheizte Pumpen sind ebenfalls bekannt. So bietet zum Beispiel der Anbieter Gather eine entsprechende Manschette zum Beheizen von Pumpenköpfen an. Entsprechende Rohrleitungen, Manschetten, etc. können natürlich auch zum Kühlen genutzt werden.

Gemäß einer weiteren bevorzugten Ausführungsform der Erfindung ist vorgesehen, dass die Systemkomponenten des Dosiersystems zumindest eine der folgenden Komponenten umfasst: eine (Dosier-)Pumpe, einen Filter, ein Absperrventil, eine Druckmesseinrichtung, eine Temperaturmesseinrichtung, eine Durchflussmesseinrichtung und ein Ablassventil. In einer besonders bevorzugten Ausführungsform sind alle diese Systemkomponenten vorgesehen. Die Messeinrichtungen, Ventile, etc. können natürlich auch zur Temperatursteuerung beziehungsweise -regelung mittels der Temperiereinrichtung genutzt werden und sind in diesem Fall dann Teil dieser Einrichtung.

Zur Ausbildung des Gehäuses weist das Modul neben der Plattenstruktur des Plattenwärmetauschers insbesondere noch folgende weitere Komponenten auf: ein Gestell, Gehäuseteile und Elemente zur thermischen Isolierung (kurz Wärmeisolierung). Das Gestell ist dabei bevorzugt so ausgestaltet, dass es auch weitere Modul-Komponenten außerhalb des Gehäuses tragen kann.

Insbesondere weist das Modul weiterhin einen Druckbehälter und/oder eine Elektronikeinheit auf. Diese Elektronikeinheit ist insbesondere eine als Remote I/O Controller bezeichnete Elektronikeinheit, also ein Gerät zur Fernabfrage und zum Schalten über weite Entfernungen via Netzwerkverbindung (z.B. Ethernet- bzw. Internetverbindung). Über diese Elektronikeinheit wird unter anderem die Temperiereinrichtung gesteuert beziehungsweise geregelt.

Bei der erfindungsgemäßen modular aufgebauten Prozessanlage für die Produktion eines chemischen und/oder pharmazeutischen Produktes mit mehreren Modulen, ist vorgesehen, dass zumindest eines dieser Module als vorstehend genanntes Dosiermodul ausgebildet ist. Die Module weisen insbesondere fest vorgegebene, auf einander abgestimmte Maße auf.

Bei dem erfindungsgemäßen Verfahren zum Temperieren eines Dosiersystems zum Dosieren von Fluiden innerhalb eines Dosiermoduls, bei dem das Dosiersystem zumindest teilweise von einem Gehäuse eingehaust wird ist vorgesehen, dass zumindest ein Teil dieses Gehäuses von zumindest einer Wärmetauscherplatte eines das Innere des Gehäuses temperierenden Plattenwärmetauschers gebildet wird.

Bevorzugte Ausführungsformen des erfindungsgemäßen Verfahrens ergeben sich analog zu den vorstehend genannten Maßnahmen bezüglich des Dosiermoduls.

Nachfolgend wird die Erfindung unter Bezugnahme auf die anliegenden Figuren anhand von bevorzugten Ausführungsbeispielen exemplarisch erläutert, wobei die nachfolgend dargestellten Merkmale sowohl jeweils für sich genommen als auch in Kombination miteinander einen Aspekt der Erfindung darstellen können. Es zeigen
Figur 1: eine schematische Darstellung von Komponenten eines erfindungsgemäßen Dosiermoduls gemäß einer bevorzugten Ausführungsform der Erfindung,
Figur 2: die Komponenten eines Gehäuses für das in Figur 1 gezeigte Dosiermodul,
Figur 3: das komplette Dosiermodul in einer Vorderansicht und
Figur 4: das komplette Dosiermodul in einer rückwärtigen Ansicht.

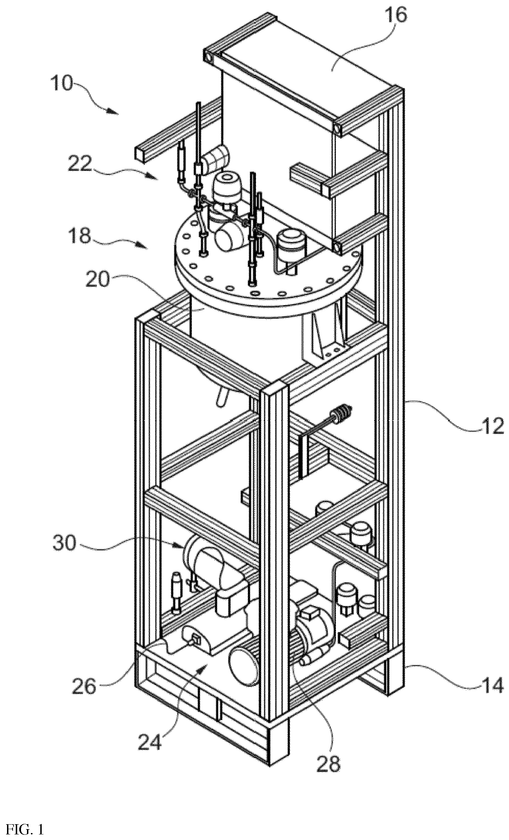

Die Figur 1 zeigt ein Ausführungsbeispiel eines Dosiermoduls 10 für eine modular aufgebaute Prozessanlage. Das Dosiermodul umfasst ein Gestell 12, auf bzw. in dem die weiteren Komponenten des Moduls 10 montiert sind. Das Gestell 12 selbst ist auf einer Palette 14 angeordnet. Die weiteren Komponenten des Dosiermoduls lassen sich wie folgt aufteilen: eine als Remote I/O Controller ausgebildete Elektronikeinheit 16, die im oberen Bereich des Gestells 12 angeordnet ist, eine Druckbehältereinheit 18 mit einem Druckbehälter 20 und entsprechender Peripherie 22, wobei der Druckbehälter 20 unterhalb und die Peripherie neben der Elektronikeinheit 16 angeordnet ist und ein Dosiersystem (eine Dosierbaugruppe) 24 in einem unteren Bereich des Moduls 10. Das Dosiersystem 24 umfasst ein Rohrleitungssystem 26 mit diversen Rohrleitungen, eine im Rohrleitungssystem 26 verschaltete Pumpe 28 und andere Systemkomponenten 30 des Dosiersystems 24, wie etwa Filter, Absperrventile, Druckmesseinrichtungen, eine Temperaturmesseinrichtung, eine Durchflussmesseinrichtung und ein Ablassventil zu einer Abfallleitung, auf die hier im Einzelnen jedoch nicht eingegangen werden soll und die daher in Summe das Bezugszeichen 30 erhalten.

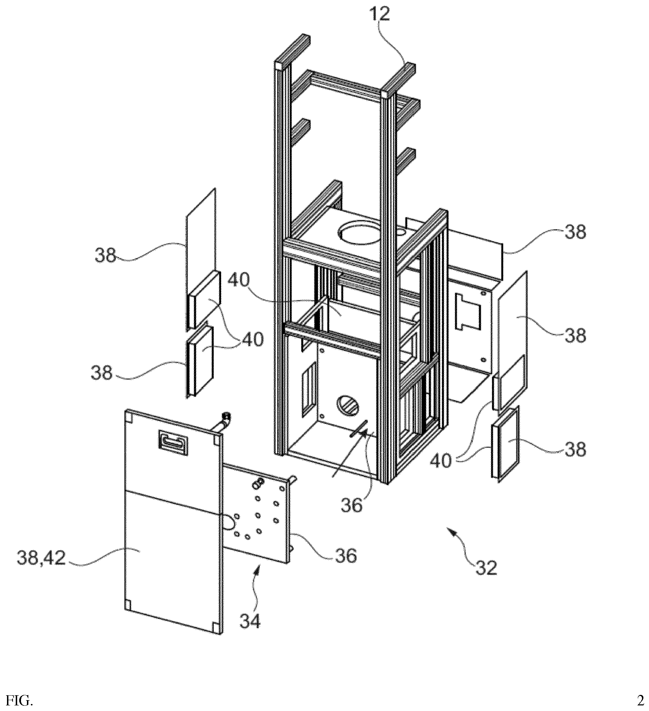

Das Dosiermodul 10 weist weiterhin ein das Dosiersystem 24 zumindest teilweise einhausendes Gehäuse 32 sowie eine als Plattenwärmetauscher 34 ausgebildete Temperiereinrichtung zum Temperieren des Inneren des Gehäuses 32 auf. Die als Remote I/O Controller ausgebildete Elektronikeinheit 16 ist ein Gerät zur Fernabfrage und zum Schalten über weite Entfernungen via Netzwerkverbindung (z.B. Ethernet- bzw. Internetverbindung). Über diese Elektronikeinheit 16 wird unter anderem auch die Temperiereinrichtung gesteuert beziehungsweise geregelt. Die Figur 2 zeigt die einzelnen Komponenten des Gehäuses 32 sowie eine zentrale Komponente des als WTP-System ausgebildeten Plattenwärmetauschers 34, nämlich eine Wärmetauscherplatte 36 dieses WTP-Systems. Die Wärmetauscherplatte 36 ist dabei so angeordnet, dass sie eine Wand des Gehäuses 32 bildet beziehungsweise mitbildet. Neben dieser Wärmetauscherplatte 36 umfasst das Gehäuse 32 weiterhin noch Gehäuseteile 38 und Elemente 40 zur thermischen Isolierung (kurz Wärmeisolierung genannt).

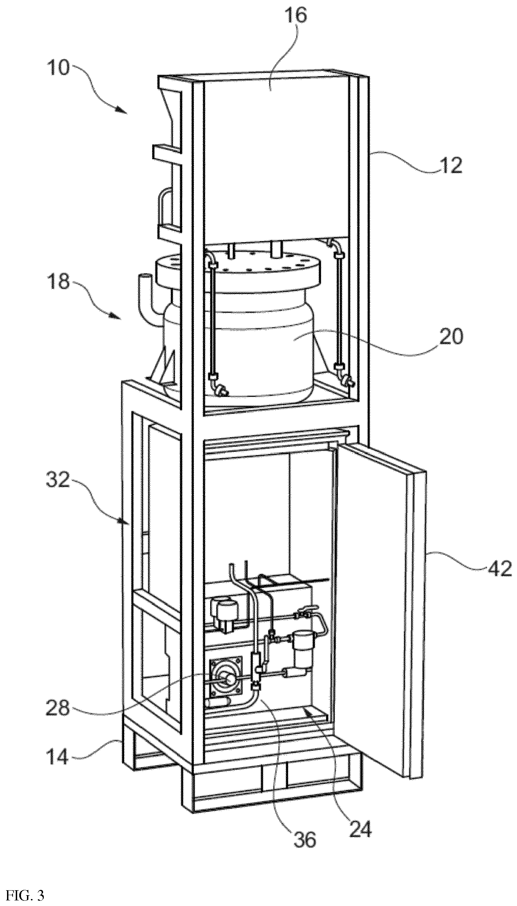

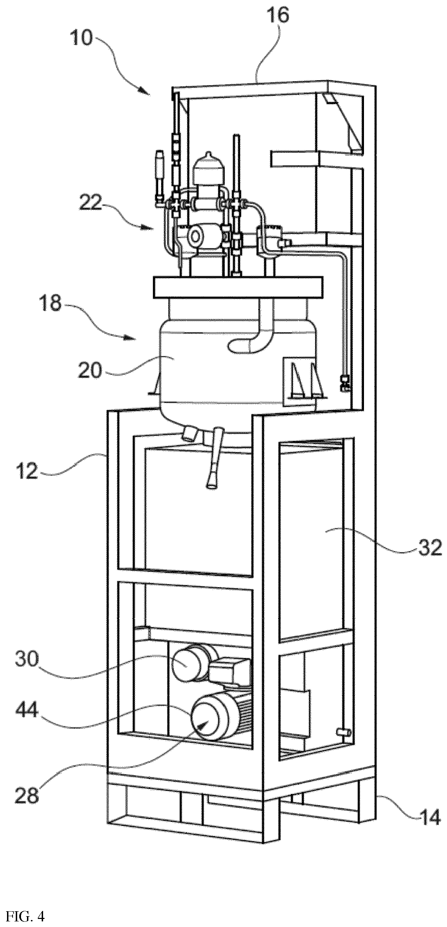

Die Figuren 3 und 4 zeigen nun das komplette Dosiermodul 10. Die Figur 3 zeigt eine Vorderansicht, bei der man auf eine geöffnete Tür 42 des Gehäuses 32 schaut und die Figur 4 zeigt eine Ansicht der Rückseite, bei der man erkennen kann, dass Teile der Pumpe 28, nämlich deren Pumpenantrieb 44, und Teile der Durchflussmesseinrichtung 30 aus dem Gehäuse 32 herausragen. Dazu weist die entsprechende Gehäusewand Durchbrüche (Öffnungen) auf. Diese Wand ist im Übrigen der von der Wärmetauscherplatte 36 (mit-)gebildete Teil des Gehäuses 32.

Im Folgenden sollen die diversen Aspekte der Erfindung sowie deren Vorteile noch einmal beschrieben werden:

Das Dosiersystem 24, in der Regel bestehend aus Pumpe 28, Rohrleitungen 26, Filtern, Durchflussmesser, Ventilen und Sensoren 30 wird als kompakte Anordnung aufgebaut und -zumindest größtenteils - in dem von der Umgebung abgrenzbaren/abgegrenzten Gehäuse 32 angeordnet. Mindestens eine Wand des Gehäuses 32 ist als temperierbare Wärmetauscherplatte 36 ausgeführt, die dem Innenraum des Gehäuses 32 die Energie entzieht bzw. zuführt, die durch Wärmeaustausch mit der Umgebung oder mit angeschlossenen Komponenten zu- bzw. abgeführt wird. Die Wandungen des Gehäuses 32 sind zweckmäßigerweise mit Wärmeisolierung 40 ausgeführt.

Die gewünschte Temperatur im Gehäuse 32 kann gemessen und zur Regelung der Temperatur des Temperiermediums für die Wärmetauscherplatte 36 herangezogen werden.

Das vorgeschlagene temperierte Dosiersystem 24 mit Einhausung folgt der Rationale, die zu temperierenden Komponenten 26, 28, 30 so weit als möglich im eingehausten Bereich temperiert zu halten und auf die Temperierung der Einzelkomponenten möglichst zu verzichten. Dies ermöglich ein effektives Temperieren.

Für den Einsatz in explosionsgeschützten Bereichen wird die Ausführung der Gehäuseteile aus einem ableitfähigen Material (z.B. Blechen) vorgeschlagen, die an dem (Rahmen-)Gestell 12 befestigt werden können (z.B. geschraubt). Die als Bleche ausgebildeten Gehäuseteile 38 können auf der Gehäuseinnenseite mit den Elementen 40 zur Wärmeisolierung beschichtet sein (z. B. durch Kleben), ebenso können Verbundmaterialien eingesetzt werden.

Da die Pumpenantriebe 44, also die Antriebsmotoren, üblicher Pumpen 28 in der Regel nicht für den Einsatz bei hohen Temperaturen ausgelegt sind, wird eine Anordnung der Pumpe 28 so vorgeschlagen, dass sich der Pumpenkopf im temperierten Gehäuse 32 befindet und der Motor außerhalb. Um die Wärmeleitung aus der Wärmetauscherplatte 36 in den Pumpenkopf zu unterstützen ist eine besonders vorteilhafte Anordnung die Anbringung der Pumpe 28 über den Flansch des Pumpenkopfs direkt an der Wärmetauscherplatte 36.

Da auch die Auswerteelektronik von Durchflussmesseinrichtungen 30 in der Regel nicht für den Einsatz bei hohen Temperaturen ausgelegt sind, wird eine Anordnung so vorgeschlagen, dass sich auch die Elektronik außerhalb des temperierten Gehäuses 32 befindet. Um die Wärmeleitung aus der Wärmetauscherplatte 36 in den das Fluid führenden Teil des Durchflussmessers 30 zu unterstützen ist eine besonders vorteilhafte Anordnung die Anbringung an der Außenseite der Wärmetauscherplatte 36.

Bezüglich der Sensoren und Aktoren sind solche zu bevorzugen, die für den Temperaturbereich innerhalb der Einhausung durch das Gehäuse 32 zugelassen sind. Falls nicht, sind die Flüssigkeit führenden Teile der Sensoren und Aktoren innerhalb des temperierten Gehäuses 32 anzuordnen und die Auswerte- bzw. Ansteuerkomponenten außerhalb.

Als Plattenstruktur 36 ist vorteilhaft eine Wärmetauscherplatte 36 eines flachbauenden WTP-Systems z. B. der LOB GmbH, Köln einsetzbar, welches das Einbringen von Bohrungen zur Befestigung von Pumpenköpfen und anderen zu temperierenden Komponenten direkt auf der Wärmetauscherplatte 36 ermöglicht.

## Patentansprüche

1. Dosiermodul (10), insbesondere für eine modular aufgebaute Prozessanlage, mit einem Dosiersystem (24) zum Dosieren eines Fluides, einem das Dosiersystem (24) zumindest teilweise einhausenden Gehäuse (32) sowie einer Temperiereinrichtung zum Temperieren des Inneren des Gehäuses (32), wobei die Temperiereinrichtung einen Plattenwärmetauscher (34) aufweist und zumindest ein Teil des Gehäuses (32) von zumindest einer Plattenstruktur (36) dieses Plattenwärmetauschers (34), insbesondere von zumindest einer sogenannten Wärmetauscherplatte, gebildet wird.

2. Modul nach Anspruch 1, **dadurch gekennzeichnet, dass** das Dosiersystem (24) mehrere über ein Rohrleitungssystem (26) miteinander strömungstechnisch verschaltete Systemkomponenten (28, 30) aufweist.

3. Modul nach Anspruch 2, **dadurch gekennzeichnet, dass** zumindest eine Systemkomponente (28, 30) des Dosiersystems (24) unmittelbar an der oder an zumindest einer der den Teil des Gehäuses (32) bildenden Plattenstrukturen (36) des Plattenwärmetauschers (34) befestigt ist.

4. Modul nach Anspruch 2 oder 3, **dadurch gekennzeichnet, dass** zumindest ein Teil der Rohrleitungen des Rohrleitungssystems (36) als medientemperierbare Rohrleitungen ausgebildet ist und/oder zumindest eine der Systemkomponenten (28, 30) medientemperierbar ist.

5. Modul nach einem der Ansprüche 2 bis 4, **dadurch gekennzeichnet, dass** die Systemkomponenten (28, 30) des Dosiersystems (24) zumindest eine der folgenden Komponenten umfasst: eine Pumpe (28), einen Filter, ein Absperrventil, eine Druckmesseinrichtung, eine Temperaturmesseinrichtung, eine Durchflussmesseinrichtung und ein Ablassventil (30).

6. Modul nach einem der vorhergehenden Ansprüche, **dadurch gekennzeichnet, dass** das Dosiermodul (10) neben der Plattenstruktur (36) des Plattenwärmetauschers (34) folgende weitere Komponenten zur Ausbildung des Gehäuses aufweist: ein Gestell (12), Gehäuseteile (38) und Elemente (40) zur thermischen Isolierung.

7. Modul nach einem der vorhergehenden Ansprüche, **dadurch gekennzeichnet, dass** das Modul (10) weiterhin einen Druckbehälter (20) aufweist.

8. Modul nach einem der vorhergehenden Ansprüche, **dadurch gekennzeichnet, dass** das Modul (10) weiterhin eine Elektronikeinheit (16), insbesondere eine als Remote I/O Controller bezeichnete Elektronikeinheit (16) aufweist.

9. Modular aufgebaute Prozessanlage für die Produktion eines chemischen und/oder pharmazeutischen Produktes mit mehreren Modulen, wobei zumindest eines der Module als Dosiermodul (10) nach einem der vorhergehenden Ansprüche ausgebildet ist.

10. Verfahren zum Temperieren eines Dosiersystems (24) zum Dosieren von Fluiden innerhalb eines Dosiermoduls (10), wobei das Dosiersystem (24) zumindest teilweise von einem Gehäuse (32) eingehaust wird und wobei zumindest ein Teil dieses Gehäuses (32) von zumindest einer Plattenstruktur (36) eines das Innere des Gehäuses (32) temperierenden Plattenwärmetauschers (34), insbesondere von zumindest einer sogenannten Wärmetauscherplatte, gebildet wird.
